# EUROPÄISCHE PATENTSCHRIFT

(11) **EP 0 464 260 B1**
(45) Veröffentlichungstag und Bekanntmachung des Hinweises auf die Patenterteilung: **11.08.1993**
(21) Anmeldenummer: 90124380.8
(22) Anmeldetag: 17.12.1990
(51) Int. Cl.: B60D 1/02

(54) **Anhängekupplung für Fahrzeuge**
Trailer hitch for vehicles
Attelage de remorquage pour véhicules

(30) Priorität: 02.07.1990 DE 4021004
(43) Veröffentlichungstag der Anmeldung: 08.01.1992
(73) Patentinhaber: Ringfeder GmbH, 47829 Krefeld (DE)
(72) Erfinder: Vandeweerd, Rolf, W-4130 Moers 1 (DE); Schäfer, Horst-Dieter, W-4156 Willich 2 (DE); Wensing, Udo, W-4200 Oberhausen 11 (DE)

(56) Entgegenhaltungen:
- CH-A- 350 197
- DE-A- 2 458 977
- DE-A- 3 226 360
- DE-B- 1 145 494
- DE-B- 1 292 512

## Beschreibung

Die Erfindung betrifft eine Anhängekupplung für Fahrzeuge, deren in einem Kuppelkörper vertikal bewegbar geführter Kuppelbolzen gegenüber einem unbeabsichtigten Anheben durch zwei jeweils formschlüssig wirkende Sicherungen arretiert ist, wobei die erste Sicherung durch einen bei geschlossener Kupplung in eine Rast des Kuppelbolzens eingreifenden, verdrehfest mit einer Betätigungswelle verbundenen Sperr- und Betätigungshebel und die zweite Sicherung durch einen am Kuppelkörper gehaltenen, über der Oberseite des geschlossenen Kuppelbolzens liegenden Sicherungsriegel gebildet ist.

Eine Kupplung mit den vorgenannten Merkmalen ist durch die DE-A-2 458 977 und DE-C 812 032 bekannt. Durch die beiden unabhängig voneinander wirkenden Sicherungen ist der Kuppelbolzen auch im Falle einer Beschädigung einer Sicherung zuverlässig gehalten und damit ein ungewolltes Entkuppeln ausgeschlossen. Um die Kupplung zu öffnen, d h., den Kuppelbolzen anzuheben, muß zunächst der die zweite Sicherung bildende Sicherungsriegel gelöst und alsdann die Rast zwischen dem Sperr- und Betätigungshebel und dem Kuppelbolzen durch Drehen der mit einem Handhebel versehenen Betätigungswelle aufgehoben werden. Eine derartige, von unterschiedlichen Angriffspunkten ausgehende Bedienung der Anhängekupplung wird von deren Benutzern mitunter als ungünstig angesehen.

Der Erfindung liegt die Aufgabe zugrunde, eine Anhängekupplung der gattungsgemäßen Art auf möglichst einfache, rein mechanische Weise so zu gestalten, daß die Kupplung unter Lösen beider Sicherungen des Kuppelbolzens von einem Angriffspunkt aus geöffnet werden kann.

Diese Aufgabe wird erfindungsgemäß dadurch gelöst, daß die Betätigungswelle in bezug auf den Sperr- und Betätigungshebel in Querrichtung verschiebbar angeordnet ist und über einen Mitnehmer in Wirkverbindung mit dem Sicherungsriegel steht.

Nach einer bevorzugten Ausgestaltung der Erfindung weisen die Betätigungswelle und der Sperr- und Betätigungshebel zum Bilden der in Querrichtung verschiebbaren Verbindung jeweils von der Kreisform abweichende, beispielsweise mehrkantig oder nach Art eines Polygons gestaltete, zusammenwirkende Flächen auf.

Für schwieriger zugängliche Anhängekupplungen, die unterhalb des Fahrzeuges und in einem größeren Abstand von dessen Hinterseite angeordnet sind, ist gemäß einer weiteren Ausführungsform der Erfindung vorgesehen, daß die Betätigungswelle eine Länge aufweist, die ein Öffnen der Kupplung von der Längsseite des Fahrzeuges her mit Hilfe eines an der Betätigungswelle angeformten Handhebels ermöglicht.

Eine alternative, gleichfalls bei der vorgenannten Anordnung der Anhängekupplung günstige Ausgestaltung der Erfindung liegt darin, daß die Betätigungswelle und ein an dieser Welle befestigter Ansatz mit einer im wesentlichen koaxial zu der Betätigungswelle angeordneten, fahrzeugseitig dreh- und querverschiebbar gelagerten Verlängerungswelle derart zusammenwirken, daß ein Öffnen der Kupplung von der Längsseite des Fahrzeuges her möglich ist.

Nach dem Einführen einer Anhängerzugöse in den Kuppelkörper muß der Kuppelbolzen geschlossen und verriegelt sein. Um diesen für die Sicherheit wichtigen Funktionszustand mittels einer Anzeigeleuchte vom Fahrersitz aus kontrollieren zu können, ist gemäß einer erfindungsgemäßen Weiterbildung die Stellung des Sicherungsriegels durch einen am Kuppelkörper gehaltenen und auf Querbewegungen des Mitnehmers ansprechenden Näherungsschalter überwachbar.

Eine letzte Ausgestaltung der Erfindung liegt darin, daß zwischen dem Kuppelkörper und einem Bund der Betätigungswelle eine Druckfeder angeordnet ist.

Die erfindungsgemäße Kupplung kann vorteilhaft über die Betätigungswelle als einzigen Angriffspunkt geöffnet werden, wobei durch Querverschieben dieser Welle der Sicherungsriegel aus seiner Wirkverbindung mit dem Kuppelbolzen gelangt und durch anschließendes Drehen der Betätigungswelle der Kuppelbolzen angehoben wird.

Ein Ausführungsbeispiel der Erfindung ist in der Zeichnung prinzipartig dargestellt und wird im folgenden näher beschrieben. Es zeigen
- Fig. 1: eine geschlossene Anhängekupplung im Bereich ihres Kuppelbolzens 2,
- Fig. 2: die Kupplung nach Fig. 1 ebenfalls in geschlossener Stellung in der Draufsicht, wobei eine in Fig. 1 gezeichnete Abdeckkappe 10 der leichteren Übersicht halber weggelassen ist,
- Fig. 3: eine der Fig. 2 entsprechende Draufsicht, jedoch der geöffneten Kupplung und mit einer gegenüber Fig. 2 abgewandelten Betätigungswelle 3.

Die Anhängekupplung hat einen Kuppelkörper 1, der als Gußteil gestaltet und mit einem Fangmaul 1a versehen ist. Innerhalb dieses Kuppelkörpers 1 ist ein Kuppelbolzen 2 vertikal bewegbar geführt, wobei zum Arretieren des geschlossenen Kuppelbolzens 2 zwei jeweils formschlüssig wirkende Sicherungen vorgesehen sind. Die erste Sicherung ist durch einen bei geschlossener Kupplung in eine Rast 2a des Kuppelbolzens 2 eingreifenden Sperr- und Betätigungshebel 4 gebildet. Die zweite Sicherung besteht aus einem am Kuppelkörper 1 gehaltenen Sicherungsriegel 5, der mit geringem Spiel oberhalb des geschlossenen Kuppelbolzens 2 angeordnet und durch die Kraft einer Feder 5a in seiner Stellung fixiert ist.

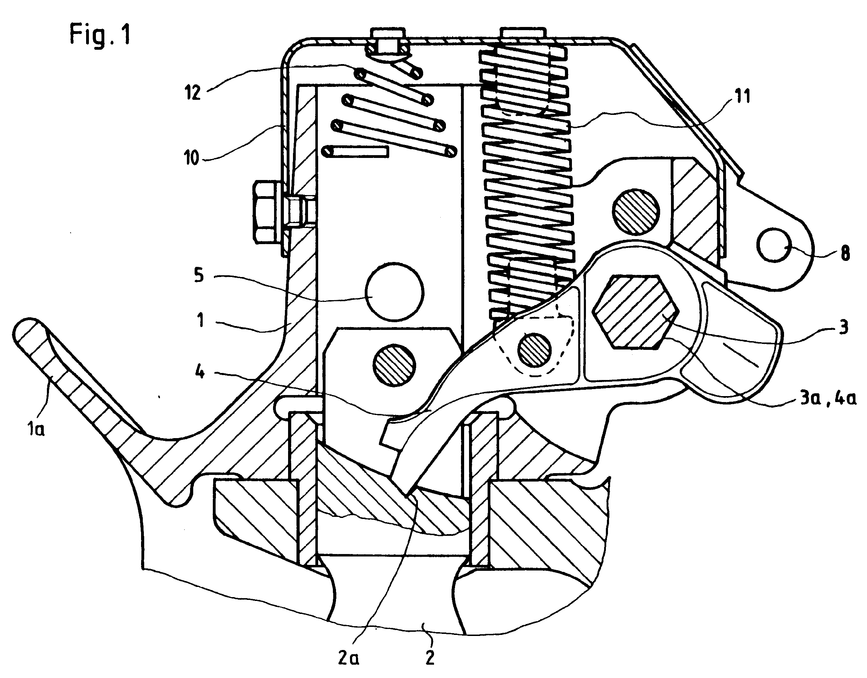

Der Sperr- und Betätigungshebel 4 und eine Betätigungswelle 3 sind drehfest miteinander verbunden, wobei die Betätigungswelle 3 in bezug auf den vorgenannten Hebel 4 in Querrichtung verschiebbar angeordnet ist. Diese drehfeste und verschiebbare Verbindung ist gemäß Fig. 1 durch von der Kreisform abweichende, hier korrespondierende sechskantige Flächen 3a und 4a an der Welle 3 bzw. am Hebel 4 gebildet; andere mehrkantig oder nach Art eines Polygons gestaltete Flächen oder eine Kerbverzahnung sind möglich. Die Betätigungswelle 3 steht über einen Mitnehmer 6 in Wirkverbindung mit dem Sicherungsriegel 5. Der im Ausführungsbeispiel an der Betätigungswelle 3 angeschraubte und am Sicherungsriegel 5 angeschweißte Mitnehmer 6 besteht aus einem einfachen Flachprofil.

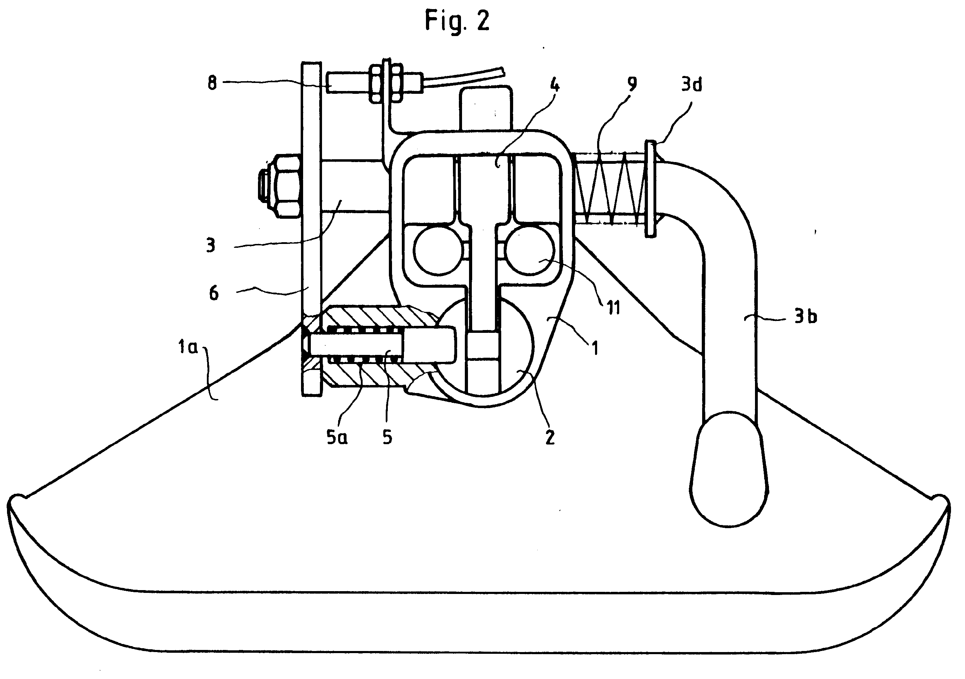

Ein aus Fig. 2 ersichtlicher, an der Betätigungswelle 3 angeformter Handhebel 3b dient dem Öffnen einer Anhängekupplung, die von der Hinterseite des Fahrzeugs aus zugänglich ist. Sollte die Kupplung jedoch unterhalb des Fahrzeuges und in einem größeren Abstand von dessen Hinterseite angeordnet sein, kann die Betätigungswelle 3 mit ihrem Handhebel 3b eine Länge aufweisen, die ein Öffnen der Kupplung von der Längsseite des Fahrzeuges her ermöglicht. Im vorgenannten Falle der schwieriger zugänglichen Kupplung ist es im Hinblick auf eine in der Regel gegebene seitliche Schwenkbarkeit des Kuppelkörpers 1 mit dem Fangmaul 1a vorteilhaft, eine fahrzeugseitig dreh- und querverschiebbar gelagerte Verlängerungswelle 7 vorzusehen, die mit der Betätigungswelle 3 über eine an dieser befindliche ballige Fläche 3e zusammenwirkt. Dadurch kann bei einer niedrig montierten Anhängekupplung die Verlängerungswelle 7 in Fahrzeugquerrichtung schräg nach oben verlaufen, so daß die Kupplung in stehender Haltung bedienbar ist.

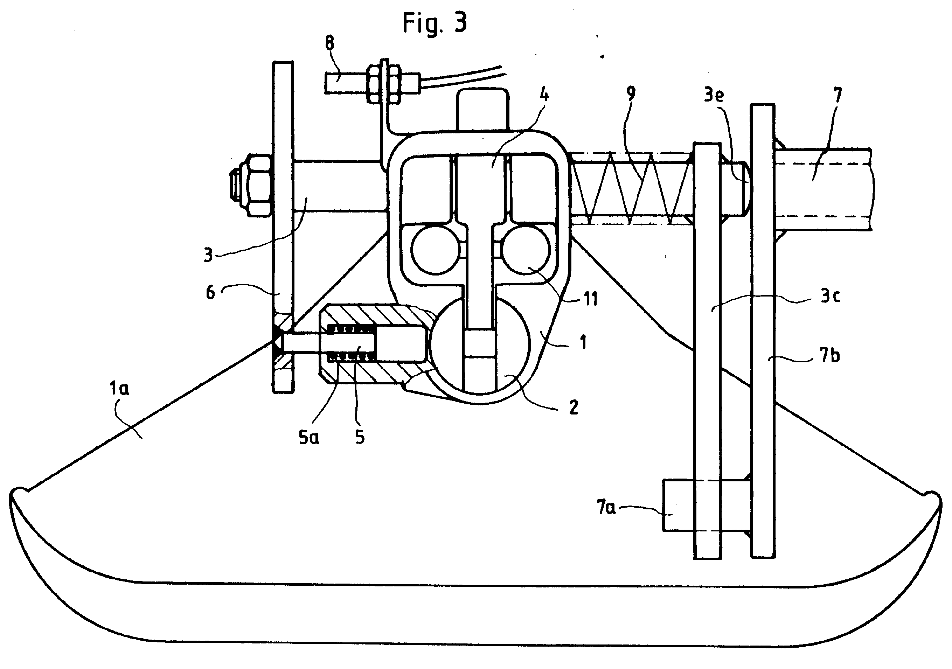

Zum Öffnen der Anhängekupplung wird die Betätigungswelle 3 entweder unmittelbar über ihren Handgriff 3b (Fig. 2) oder über einen ähnlichen, nicht dargestellten Handgriff der Verlängerungswelle 7 (Fig. 3) in Zeichnungsebene nach links geschoben. Dies geschieht gegen die Kraft der den Sicherungsriegel 5 umgebenden Feder 5a und einer zwischen dem Kuppelkörper 1 und einem Bund 3d der Betätigungswelle 3 beziehungsweise einem Hebelarm 7b der Verlängerungswelle 7 angeordneten Druckfeder 9, wobei auch eine dieser Federn 5a und 9 weggelassen werden kann. Durch das Querverschieben gelangt der über den Mitnehmer 6 mit der Betätigungswelle 3 gekuppelte Sicherungsriegel 5 aus seiner Wirkverbindung mit dem Kuppelbolzen 2. Alsdann genügt ein Drehen der Betätigungswelle 3, um die Rast zwischen dem Kuppelbolzen 2 und dem Sperr- und Betätigungshebel 4 zu lösen und den Kuppelbolzen 2 anzuheben. Bei der Gestaltung nach Fig. 3 wird die über die Verlängerungswelle 7 eingeleitete Drehbewegung durch einen Zapfen 7a, der an einem Hebelarm 7b der Verlängerungswelle 7 angeschweißt ist, auf einen rechtwinklig an der Betätigungswelle 3 befestigten Ansatz 3c übertragen.

Um die beiden Funktionszustände der Anhängekupplung - Kuppelbolzen 1 geöffnet oder geschlossen und verriegelt - mit Hilfe einer Anzeigeleuchte vom Fahrersitz aus kontrollieren zu können, ist am Kuppelkörper 1 ein Näherungsschalter 8 gehalten, der auf Querbewegungen des Mitnehmers 6 und damit des Sicherungsriegels 5 hin anspricht.

Unterhalb der in Fig. 1 dargestellten Abdeckkappe 10 befindliche Federn 11 und 12 dienen dem selbsttätigen Schließen des Kuppelbolzens 2, wenn eine anhängerseitige Zugöse in die Kupplung eingeführt wird. Derartige Federn 11 und 12 sind bei automatischen Anhängekupplungen gebräuchlich.

## Patentansprüche

1. Anhängekupplung für Fahrzeuge, deren in einem Kuppelkörper (1) vertikal bewegbar geführter Kuppelbolzen (2) gegenüber einem unbeabsichtigten Anheben durch zwei jeweils formschlüssig wirkende Sicherungen arretiert ist, wobei die erste Sicherung durch einen bei geschlossener Kupplung in eine Rast (2a) des Kuppelbolzens (2) eingreifenden, verdrehfest mit einer Betätigungswelle (3) verbundenen Sperr- und Betätigungshebel (4) und die zweite Sicherung durch einen am Kuppelkörper (1) gehaltenen, über der Oberseite des geschlossenen Kuppelbolzens (2) liegenden Sicherungsriegel (5) gebildet ist, dadurch gekennzeichnet, daß die Betätigungswelle (3) in bezug auf den Sperr- und Betätigungshebel (4) in Querrichtung verschiebbar angeordnet ist und über einen Mitnehmer (6) in Wirkverbindung mit dem Sicherungsriegel (5) steht.

2. Anhängekupplung nach Anspruch 1, dadurch gekennzeichnet, daß die Betätigungswelle (3) und der Sperr- und Betätigungshebel (4) zum Bilden der in Querrichtung verschiebbaren Verbindung jeweils von der Kreisform abweichende, beispielsweise mehrkantig oder nach Art eines Polygons gestaltete, zusammenwirkende Flächen (3a, 4a) aufweisen.

3. Anhängekupplung nach Anspruch 1 oder 2, dadurch gekennzeichnet, daß die Betätigungswelle (3) eine Länge aufweist, die ein Öffnen der Kupplung von der Längsseite des Fahrzeuges her mit Hilfe eines an der Betätigungswelle (3) angegeformten Handhebels (3b) ermöglicht.

4. Anhängekupplung nach Anspruch 1 oder 2, dadurch gekennzeichnet, daß die Betätigungswelle (3) und ein an dieser Welle (3) befestigter Ansatz (3c) mit einer im wesentlichen koaxial zu der Betätigungswelle (3) angeordneten, fahrzeugseitig dreh- und querverschiebbar gelagerten Verlängerungswelle (7) derart zusammenwirken, daß ein Öffnen der Kupplung von der Längsseite des Fahrzeuges her möglich ist.

5. Anhängekupplung nach einem der Ansprüche 1 bis 4, dadurch gekennzeichnet, daß die Stellung des Sicherungsriegels (5) durch einen am Kuppelkörper (1) gehaltenen und auf Querbewegungen des Mitnehmers (6) ansprechenden Näherungsschalter (8) überwachbar ist.

6. Anhängekupplung nach einem der Ansprüche 1 bis 5, dadurch gekennzeichnet, daß zwischen dem Kuppelkörper (1) und einem Bund (3d) der Betätigungswelle (3) eine Druckfeder (9) angeordnet ist.

## Claims

1. A trailer coupling for vehicles, wherein the coupling pin (2), guided in a vertically displaceable manner in a coupling member (1), is prevented from being inadvertently lifted by means of two respective safety devices acting in a positively locking manner, the first safety device being formed by a locking and actuating lever (4) engaging in a notch (2a) in the coupling pin (2) when the coupling is closed, and connected in a rotationally fixed manner with an actuating shaft (3), and the second safety device being formed by a securing bolt (5) held on the coupling member (1) and lying above the top of the closed coupling pin (2), **characterised in that** the actuating shaft (3) is arranged so as to be transversely displaceable in relation to the locking and actuating lever (4) and is operatively connected to the securing bolt (5) by means of an entrainment means (6).

2. A trailer coupling according to claim 1, **characterised in that** the actuating shaft (3) and the locking and actuating lever (4) have co-operating surfaces (3a, 4a) each deviating from the shape of a circle, for example having a plurality of edges or being shaped in the manner of a polygon, so as to form the transversely displaceable connection.

3. A trailer coupling according to claim 1 or 2, **characterised in that** the actuating shaft (3) is of a length which allows the coupling to be opened from the longitudinal side of the vehicle by means of a hand lever (3b) formed on the actuating shaft (3).

4. A trailer coupling according to claim 1 or 2, **characterised in that** the actuating shaft (3) and an attachment (3c) secured thereto co-operate with an extension shaft (7) - arranged substantially coaxially with the actuating shaft (3) and mounted in a rotationally and transversely displaceable manner on the vehicle - in such a manner that it is possible to open the coupling from the longitudinal side of the vehicle.

5. A trailer coupling according to one of claims 1 to 4, **characterised in that** the position of the securing bolt (5) can be monitored by means of a proximity switch (8) held on the coupling member (1) and responsive to the transverse movements of the entrainment means (6).

6. A trailer coupling according to one of claims 1 to 5, **characterised in that** a compression spring (9) is arranged between the coupling member (1) and a collar (3d) on the actuating shaft (3).

## Revendications

1. Attelage de remorquage pour véhicules, dont l'axe d'attelage (2) guidé de manière à pouvoir être déplacé verticalement dans un corps d'attelage (1) est bloqué par deux sécurités de blocage pour éviter qu'il ne se lève involontairement, la première sécurité étant formée par un levier de blocage et d'actionnement (4) relié à un arbre d'actionnement (3) de manière à résister à la torsion et engrenant dans une encoche (2a) de l'axe d'attelage (2) lorsque ce dernier est fermé, et la seconde sécurité étant formée par un verrou de sûreté (5) fixé au corps d'attelage (1) et situé au-dessus de la face supérieure de l'axe d'attelage (2) fermé, caractérisé en ce que l'arbre d'actionnement (3) est disposé de manière à pouvoir être déplacé transversalement par rapport au levier de blocage et d'actionnement (4) et est relié activement au verrou de sûreté (5) par le biais d'un entraîneur (6).

2. Attelage de remorquage selon la revendication 1, caractérisé en ce que l'arbre d'actionnement (3) et le levier de blocage et d'actionnement (4) présentent chacun des surfaces (3a, 4a) autres que circulaires, par exemple à plusieurs côtés ou semblables à un polygone, qui coopèrent entre elles pour former la liaison pouvant être déplacée transversalement.

3. Attelage de remorquage selon la revendication 1 ou 2, caractérisé en ce que l'arbre d'actionnement (3) a une longueur qui permette d'ouvrir l'attelage par le côté longitudinal du véhicule au moyen d'un levier à main (3b) réalisé sur l'arbre d'actionnement (3).

4. Attelage de remorquage selon la revendication 1 ou 2, caractérisé en ce que l'arbre d'actionnement (3) et une butée (3c) fixée à cet arbre (3) coopèrent avec un arbre de rallonge (7) disposé essentiellement de manière coaxiale par rapport à l'arbre d'actionnement (3) et monté du côté du véhicule de manière rotative et de manière à pouvoir être déplacé transversalement de telle manière qu'il soit possible d'ouvrir l'attelage depuis le côté longitudinal du véhicule.

5. Attelage de remorquage selon l'une des revendications 1 à 4, caractérisé en ce que la position du verrou de sûreté (5) peut être contrôlée par le biais d'un détecteur de proximité (8) fixé sur le corps d'attelage (1) et réagissant aux mouvements transversaux de l'entraîneur (6).

6. Attelage de remorquable selon l'une des revendications 1 à 5, caractérisé en ce qu'un ressort à pression (9) est disposé entre le corps d'attelage (1) et un épaulement (3d) de l'arbre d'actionnement (3).
